# EUROPEAN PATENT SPECIFICATION

(11) **EP 0 550 098 B1**
(45) Date of publication and mention of the grant of the patent: **08.05.1996**
(21) Application number: 92203977.1
(22) Date of filing: 17.12.1992
(51) Int. Cl.: F16H 47/02

(54) **Hydromechanical transmission system**
Hydromechanisches Getriebesystem
Système de transmission hydromécanique

(30) Priority: 30.12.1991 NL 9102187
(43) Date of publication of application: 07.07.1993
(73) Proprietor: DAF TRUCKS N.V., 5643 TW Eindhoven (NL)
(72) Inventor: Klaasse, Marinus Johannes, NL-5505 NV Veldhoven (NL)
(74) Representative: Timmermans, Anthonius C.Th., Ir.

(56) References cited:
- EP-A- 0 310 873
- EP-A- 0 523 280
- FR-A- 2 477 658
- GB-A- 974 532
- US-A- 3 283 612
- US-A- 3 880 017
- US-A- 4 223 532

## Description

The invention relates to a transmission system.

Known transmission systems used in, for example, trucks, buses, passenger cars or off-road vehicles, form part of a so-called driveline, generally comprising an engine, for example a diesel engine, driving through a clutch, a gearbox with fixed ratios connected to the clutch, a propeller shaft connected to the gearbox and a rear axle with differential to the drive shafts with wheels connected to said differential. It is also known that, where desired, automatic transmission systems, such as a continuously variable transmission or an automatic gearbox with fixed ratios, are used.

The known automatic transmission systems have to a greater or lesser extent disadvantages with regard to the generally lower overall efficiency or a low transmission range, as a result of which the tractive effort needed, for example, to pull a vehicle away from stationary is relatively low. The known transmission systems also often suffer from the problem that at various times gear-shift jerks which are annoying or have an adverse effect on the ride comfort, or annoying interruptions in tractive effort occur.

Other transmissions, like hydrostatic variable speed drives comprising a hydraulic pump powered by a drive shaft and a hydraulic motor hydraulically connected to the aforementioned pump and mechnically connected to the output shaft, do overcome some of the drawbacks of the automatic transmission systems. A remedy to the in general poor overall gear ratio and efficiency of such hydrostatic drives is given in patent US-A-3 283 612, comprising a pump with fixed delivery rate and a motor with a variable displacement.

Associated disadvantages of the known transmission systems relate to the fuel consumption of the transmission system as a whole and to the ultimate performance of the driver, this performance consisting of the average speed achieved in relation to the amount of fuel used over a specific known route with a known vehicle load. This transport performance is in the circumstances dependent to a great extent upon the quality of the individual driver and the kind of driveline. There is a need in practice for the quality of the driver to be less determinative for the ultimate performance.

The present invention aims to meet this need by providing a compact transmission system in accordance with an improved transmission concept, laying the foundation for a way of power transmission offering, for automotive applications, the possibility of achieving an uninterrupted transmission of drive effort and, accordingly, a much higher transport performance.

To this end, the transmission system forming the object of the presented invention features a hydromechanical variator with a first pump having a fixed delivery rate and a second pump having an adjustable delivery rate hydraulically connected to the first pump, each pump having at least a pump shaft and a pump housing as component parts, one component of the first pump being connected for rotation with a driven input shaft of the transmission system and the other component being coupled for rotation with a hydraulically driven output shaft of the transmission system, and wherein one of the two component parts of the adjustable second pump is fixed to the transmission housing, characterized in that the other component part of the second pump is coupled for rotation with the driven input shaft to influence the speed and the torque transmitted hydraulically to the output shaft by controlling the delivery rate of the second pump.

The advantage of the transmission system forming the object of the present invention is that its design is extremely flexible, there being at least four different ways of enabling the speed of the output shaft to be varied by adjustment of the second pump. The pump shaft of the second pump can repeatedly be coupled to the driven input shaft, while the pump housing of the second pump is connected to the gear-box housing, or the opposite situation applies with regard to the component parts in question, in which case the pump shaft is fixed to the gear-box housing and the pump housing is connected to the driven shaft. In addition, this arrangement can be combined ultimately to constitute four different possibilities, since the pump shaft of the first pump can be connected to the driven shaft, in which case its pump housing is connected to the output shaft, but this way of connecting up the component parts of the first pump can also be reversed.

In principle, there is even the possibility of using the transmission system forming the object of the present invention to make the vehicle move off from stationary, either forward or backward, without slip energy being generated. Moreover, it is, if desired, also possible to shift to the so-called overdrive, where the first pump is driven in the up-speed range in which the driven output shaft rotates even faster than the driven input shaft. In brief, an uninterrupted tractive effort to the wheels of the vehicle is provided over a wide control range.

Another advantage of the present transmission concept is that it enables pumps of, in principle, any type to be used, since both axial and, for example, radial-type pumps can be employed.

A feature of the transmission system forming the object of the present invention is that one component part of the first pump is the pump shaft which is connected to the input shaft and the other component of the first pump is the pump housing which is connected to the output shaft, and that the input shaft is designed as a pump shaft passing through the first pump.

The advantage of this is that, besides the torque at the output shaft connected to the pump housing of the first pump, which can be hydraulically influenced, a permanent torque is also available at the pump shaft passing through the first pump, since it is directly connected to the driven input shaft. Moreover, this creates the possibility of thus forming a double concentric output on the hydromechanical variator, contributing to its compact design.

This solution differs form the transmission described in the above mentioned patent in that the latter has only one output shaft the torque of which is hydraulically influenced by controling the adjustable pump.

In a version of the present invention elaborating on the above-mentioned design features, the pump shaft passing through the first pump should preferably be designed in such a way that it also passes through the adjustable second pump, enabling a separate drive system for the adjustable second pump to be dispensed with.

Dividing the adjustable second pump into a set-up with a fixed delivery rate and one with a variable delivery rate makes it possible for the torque at the output shaft to be influenced more quickly. This is because pumps with a relatively small variable delivery rate can be controlled more quickly than pumps with a larger delivery rate.

A further version of the present invention has a mechanical gearbox with two input shafts and one driven output shaft, one input shaft being connected to one of the two component parts of the first pump and the other input shaft connected to the other component of the first pump, whilst the gearbox contains connectable gear sets which connect the first or second input shaft to the drive shaft.

Another version of the present invention has the feature that one input shaft is connected to the driven input shaft designed as a through pump shaft, whilst the concentric rotatable pump housing of the second pump is connected to the other concentric input shaft.

This version has the advantage that, even when the clutch is in operation, the full hydraulic pressure is available in the pump with a fixed delivery rate connected to the driven shaft to provide the torque needed to accelerate quickly away from stationary.

The transmission system forming the object of the present invention and its constituent hydromechanical variator can be beneficially combined with a mechanical gearbox provided with two input shafts and one driven output shaft, one input shaft being connected to one of the two component parts of the first pump and the other input shaft connected to the other component of the first pump, whilst the gearbox contains gear units which connect the first or second input shaft to the drive shaft.

The advantage of this is that, on changing up to the next gear, i.e. on moving to the next set of gears, there is no interruption in the driving force to the drive shaft, since when shifting gears, the drive shaft remains connected to the component part of the first pump driven by the input shaft, viz. the pump shaft or the pump housing. The transmission system forming the object of the present invention is therefore very suitable for use in vehicles, such as trucks, buses, tractors, off-road vehicles, etc. In those vehicles and those circumstances, e.g. accelerating from stationary on a gradient, an uninterrupted torque is available at the wheels, so that under all load conditions and at every vehicle speed, full control of the vehicle is obtained or maintained at all times.

The concentric output shafts of the hydraulic variator should preferably be connected to the concentric input shafts of the mechanical gearbox in a version in accordance with the present invention in which one input shaft is connected to the driven input shaft designed as a through pump shaft, and the concentric rotatable pump housing of the first pump is connected to the other concentric input shaft.

A further version of the transmission system according to the invention has the feature that the gearbox is provided with a layshaft which is rotatably connected to one input shaft at the front of the gearbox and furthermore connected to the drive shaft by several different connectable gears.

This has the advantage that the layshaft, which is permanently driven, is available to guarantee the driving of, in particular, auxiliary equipment, such as an alternator, hydraulic pump, fan, compressor, etc., by means of connectable gear sets in a way that is not influenced by the variator.

Another version of the transmission system forming the object of the present invention has the feature that the transmission system has an engine connected to the driven input shaft and a central control unit which has a first input to which a control signal is given which includes a measure of the torque to be developed at the driven output shaft, depending upon the position of the accelerator, and has at least two outputs, the first one connected to the second pump with a variable delivery rate and the second one to the mechanical gearbox for the control, depending upon the control signal, of the delivery rate of the second pump and the successive operation of the connectable gear sets in the mechanical gearbox.

This has the advantage that the speed setting of the output shaft can be regulated as desired by varying the delivery rate of the second pump. Furthermore, the engine speed can be influenced by the control unit.

A preferred version of the present invention, creating the possibility of minimising the fuel consumption, has the feature that the control unit possesses a memory which is loaded with data containing the relationship optimised according to the fuel consumption between the engine speed and the torque developed at that moment by the engine.

A benefit is that the engine speed can continuously be adapted to the vehicle speed, in such a way that the necessary power is generated in the engine characteristic range that is most favourable for fuel consumption.

The transmission system forming the object of this invention also has the feature that it is controllable over a wide engine speed range, that the control system and the adjustable second pump are designed to control the first pump in the up-speed range, one of the component parts of the first pump rotating faster than the other component connected to the driven input shaft, that each of the connectable gear sets connected to the control unit provides for connecting/disconnecting of the gears and that speed sensors connected to the control unit are connected to shafts which can be separately connected.

This makes it possible to control the first pump up to within the up-speed range, at which moment the gears in the relative gear set can be connected, so that during acceleration the drive to the drive shaft is temporarily provided by the layshaft, during which period the adjustable second pump can be governed to a lower or even reversed flow condition at which the following gear set can be connected and the first gear set disnconnected, after which further acceleration occurs in a next transmission ratio, the second pump is adjusted upward, etc., etc.

One of the highest gears of the gearbox incorporated in the transmission system should preferably be made direct-drive, giving, where desired, a direct 1:1 ratio drive to the drive axle, but without any loss of efficiency in the hydraulic variator.

Still another object of the present invention is to connect the control unit with a brake system customary in vehicles, such that when engaging the brake system, the adjustable second pump moves the hydraulic medium through a resistance which, if desired, can be adjustable.

An advantage is that at least a part of the kinetic energy of the vehicle is destroyed, as in the circumstances this energy is converted into heat in the resistance. The normal brake system can therefore in principle be calculated for a smaller braking capacity, which is of particular interest with smaller rim diameters of the wheels.

The transmission system forming the object of the present invention should preferably contain a synchronised clutch interposed between the component part of the first pump driven with a variable torque and the relative input shaft of the mechanical gearbox, making another, different transmission ratio setting possible in a simple way, without any additions to the mechanical gearbox.

The invention will be explained with the aid of the accompanying drawings, together with the associated further advantages, the elements in the various figures which correspond to each other being given the same reference numbers.
Figure 1 shows a special version of the transmission system forming the object of the invention, featuring a hydraulic variator connected to a mechanical gearbox;
Figure 2 a further simplified version of the transmission system forming the object of the present invention, corresponding to the version in figure 1;
Figure 3 a further possible version of the transmission system, forming the object of the present invention;
Figure 4 a diagram in which the engine speed is given as a function of the vehicle speed and with the aid of which the operation of the transmission system forming the object of the present invention will be explained;
Figures 5a-5f diagrams of variants of the versions of, in particular, the hydromechanical variator for use in the transmission system forming the object of the present invention; and
Figure 6 a special version of the mechanical gearbox, in which multi-plate clutches are used.

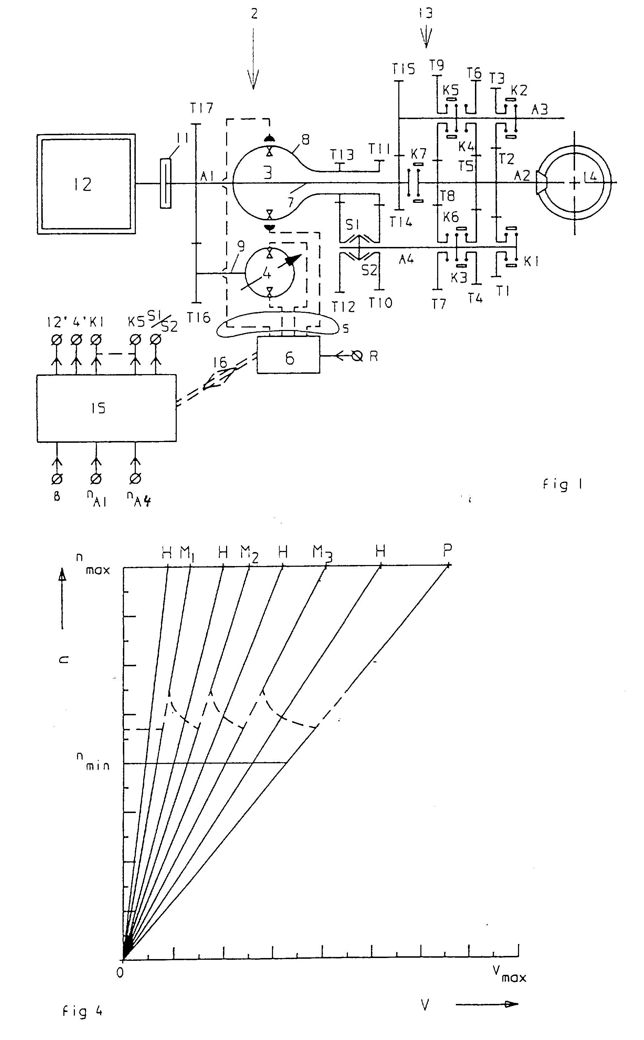

Figure 1 shows a preferred version of a transmission system 1 intended for vehicle propulsion, in which a hydraulic variator 2 is connected to a mechanical gearbox 13. The hydraulic variator 1 contains a first pump 3 and a second adjustable pump 4, which are connected to each other and, if desired, to a valve control unit 6 with hydraulic pipes.

The pump 3 has component parts in the form of a rotatable pump shaft 7 and a likewise rotatable pump housing 8. The adjustable pump 4 similarly has a pump shaft 9 and a pump housing 10. In the version shown the pump shaft 9 is rotatable and housing 10 is supported on to the gear-box housing, but, if desired, this can be reversed. Pump shaft 7 and pump housing 8 of pump 3 are also each rotatable and, again in the version shown in figure 1, the pump shaft 7 is driven by an input shaft A1. However, it is also conceivable that the shaft A1 drives the housing 8.

Figure 1 shows a version in which the pump shaft 7 is rigidly attached to the input shaft A1. If desired, the pump 4 can be located on the same shaft A1, in which case the pump shaft 9 and the pump shaft 7 both pass through and end in shaft A1, as shown in figure 2. In that case, the gears T16 and T17 for driving pump shaft 9, shown in figure 1, can even be completely dispensed with.

Figure 3 shows for the hydraulic variator 2 a version in which the shaft A1 passes through into the mechanical gearbox 13 which remains to be detailed. and where pump shafts 7 and 9 are driven by gears T18, T19 and T20.

Shaft A1 is, if desired, driven via a damper 11, as shown, by a diesel engine 12.

The pumps 3 and 4 can, in familiar fashion, be specified as axial or radial plunger-type pumps. The hydromechanical variator constructed in this way is very flexible in its design and offers the possibility of influencing the difference in speed between the pump shaft 7 and the pump housing 8 in the following way. As shown in the diagram, the adjustable pump 4 is capable of circulating an adjustable quantity of the hydraulic medium, generally oil, in a closed circuit in which pump 3 is also located; this is dependent upon the swept volume setting of pump 4. If the volume of oil pumped corresponds to the displaced oil volume of pump 3, which is determined by the relative difference in speed between the shaft 7 and the housing 8 multiplied by the capacity of the relative pump, the pump housing 8 will be stationary. By reducing the capacity of the pump 4 and the corresponding delivery, the difference in speed between shaft 7 and housing 8 will decrease, because pump 3 will no longer be able to unload the volume flow at pump 4. If the delivery is reduced to zero, the pump housing 8 will rotate at the same speed as the pump shaft 7 and the driven input shaft A1. In this state no hydraulic power is generated, so that the relative hydraulic loss will be practically nil.

Since the variator 2 can, if desired, be controlled in the up-speed range, namely by, for example, driving the pump 4 in the reverse direction, causing the pressure of the pump 4 to be reversed maintaining the same direction of pump rotation, it becomes possible to make the pump housing 8 rotate more quickly than the shaft A1. In principle, with a proper choice of the capacities of pumps 3 and 4, any desired range of the hydraulic variator 2 can be realised. The minimum necessary pump capacities are determined by the power of the engine 12, the engine torque curve, the maximum permissible differences in the speed of pump housing 8 compared with that of pump shaft 7, the maximum permissible working pressure of the hydraulic medium and the torque increase to be generated by the variator 2.

The transmission system also contains the mechanical gearbox 13, which is connected to the essentially concentric input shafts of the variator 2 which is formed by the pump shaft 7, around which in the version in figure 1 the pump housing 8 with gears T11 and T13 can rotate. The gearbox 13 contains a driven output shaft A2, which is connected to a crownwheel 14 to drive the wheels (not shown) of a vehicle. The shaft A2 can be connected to the shaft A1 via a clutch K7 which can be engaged as desired, the combination of shafts A1 and A2 preferably being made as direct-drive, so as to reduce losses in the gearbox 13 to a minimum and to keep the construction as such as simple as possible.

The mechanical gearbox also has a shaft A4,which can be driven via a synchronous clutch S1/S2 through gears T10 and T12, respectively, which mesh with the respective gears T11 and T13. This makes the speed of the shaft A4 variable, since it can be controlled together with the housing 8 by regulating pump 4. The various gears and clutches, shown in the customary fashion, are formed by gears T1, T4, T7, which is fitted on shaft A4 together with the clutches K1, K3 and K6, the gears T2, T5 and T8 being fixed rigidly on the shaft A2 and meshing with the above-mentioned gears. The mechanical gearbox 13 further has a shaft permanently driven by gears T14 and T15: layshaft A3. The gears T9, T6 and T3 are also fitted on the layshaft, clutches K2, K4 and K5 also being shown. Since, as far as the specification of the gearbox 13 is concerned, the various parts are the same as those in figure 2, these parts have not been given the corresponding reference numbers.

The transmission system 1 contains a control unit 15 which is shown in figure 1 in a version in which it is connected to the valve control unit 6 by a signal track 16. The control unit 15 has inputs β, n_{A1}, n_{A4} and outputs 12', 4', K1, K2, K3, K4, K5 and S1/S2. At input β a signal is sent to the control unit 15 containing a measure for the desired torque to be developed on the driven output shaft A2 compared with the speed of A1. In general this signal represents the rate of injected fuel. Signals are sent to the inputs n_{A1} and n_{A4} which are generated with the aid of suitable sensors and represent the speed of shaft A1 and A4. On the basis of the knowledge of the speed of the shafts A1 and A4, and in view of the fact that the transmission ratios of the various meshing gears are known, it is possible to calculate in the control unit 15 what the speed of, for example, the shafts A2 and A3 is and what, depending among other things, on whether the clutches K1-5 have been engaged or not, the differences in peripheral speed are between meshing gears. The different control signals, calculated by the control unit 15 on the basis of the known input data, are available at the above-mentioned outputs. Output 12' sends a control signal to engine 12 for the supply of torque. Output 4' controls the delivery of pump 4, control signals K1-K5 are intended for connecting or disconnecting the respective gear sets and output S1/S2 controls the relative synchronous clutch.

The operation of the transmission system as a whole is as follows: When the vehicle is standing still the speed of shaft A2 is zero. The initial situation of the reversible synchronous clutch is such that gear T12 is connected via S1 to T13, which is rigidly attached to pump housing 8. When starting engine 12 in the customary neutral position with a lever connected to control unit 15, shaft A1 has a certain speed, where pump housing 8 is initially stationary,so that the delivery of pump 3 is completely absorbed by pump 4. In the "drive" position of the gear lever, gear T1 is then connected to A4 via clutch K1, realising the transmission to shaft A2. If, in response to the signal at input β, the engine speed adjusts to a certain controlled value, the pump 4 will be directed towards a delivery of ultimately zero in response to control unit 15. As a result, the speed of gear T13 increases and shaft A2 starts to rotate at the next speed from the relative transmission ratio. Pump 4 is then driven so far that gear T13 is driven into the up-speed range via the state in which the generated hydraulic power is zero. The driving of variator 2 is stopped by control unit 15 as soon as the speed of gear T3 is equal to the speed of the shaft A3, at which moment clutch K2 is closed and clutch K1 is opened. This point corresponds in figure 4 with the point at which the horizontal line intersects line M1. The power developed by the engine is then routed via A1 along layshaft A3 to shaft A2 and to the wheels of the vehicle. When pump 4 is adjusted back by control unit 15, there will then be an opportunity to release clutch K1 since gear T1 is pulled over the tooth backlash of T2. The variator 2 is then adjusted back so far until gear T4 on shaft A2 driven by gear T5 rotates just as fast as A4. K3 then connects T4 rigidly to A4 and the delivery rate of pump 4 is raised again, upon which the speed, after an initial increase along line 1, will gradually decrease. At the moment when the hydraulic pressure rapidly increases, K2 is released and the transmission system is again in the hydromechanical operating range. If the next H-line is intersected as the speed drops, then this is the point where the variator 2 begins to operate in the up-speed range. The variator 2 is driven to the point where T6 runs just as fast as A3, at which moment K4 can be closed, after which K3 can then be opened. In that case, the drive is again routed via layshaft A3, after which the variator 2 is again adjusted back and, for example, there is the opportunity to shift the synchronous clutch from S1 to S2, so that the gearset T11 and T10 will then become operational and, with the new variator drive, the speed of A4 is equal to that of T4 and, once again, K3 can be engaged and K4 disengaged. After the speed of pump 4 has been raised hydraulically to that of the shaft A4, K4 is connected and K3 is disconnected, etc. The procedure just described is repeated until the speeds of A1 and A2 are equal to each other, upon which the control unit 15 sends a signal to clutch K7, after which the mechanical gearbox 13 functions in this version in the highest gear as a conventional direct-drive. In this highest gear this gearbox 13 does not differ from an all-mechanical multi-step gearbox as normally used. In this state the hydraulic pump 4 is set to zero delivery, which value is very close to direct-drive. In this way the pump is on stand-by, to immediately engage the hydromechanical range when the driver fully applies the accelerator. The ultimate loss of power is very slight in this state, too, because it is not necessary to circulate hydraulic medium and the pump 4 can be set to a low pressure, so that the total transmission efficiency is kept very high. In figure 4 the initially explained pattern of the speed of engine 12 as a function of vehicle speed is further explained in case a gearbox 13 is used with four speeds. Compared with a classical gearbox, which only permits speed variations along the lines M1, M3 or P (direct-drive), it is clear that the variation in engine speed by the use of the present transmission system is essentially restricted and, moreover, can be concentrated in that area of the engine speeds where the fuel consumption is minimal. This applies particularly if the vehicle is being moved forward in steady state conditions and the driver, by influencing the position of the accelerator, sets a certain value of the engine torque he desires. The control unit 15 is arranged in such a way that an endeavour is made to achieve a balance between the power supplied at the engine (equals the power required at the wheels) and a minimum of fuel consumption. This point of balance is moved by further depressing the accelerator, the fuel surplus being translated into more power, so that the ultimately desired state is achieved more quickly. Full depression of the accelerator is translated into a desired maximum power. If the accelerator is not depressed, the control unit 15 translates this signal in such a way that no further gear shifts have to be made. Should the vehicle decelerate, a certain minimum speed of the engine 12 is maintained by shifting down through the various mechanical ranges. If there is a considerable decrease in engine speed and the accelerator is not depressed, the gearbox 13 can jump one or more mechanical steps.

The hydromechanical variator 2 can also be used as a retarder and, if desired, be connected to the classical brake system of a vehicle. By depressing the brake pedal fitted, pump 4 can in certain circumstances also be influenced by control unit 15 by a braking signal to input R of valve control unit 6 via signal track 16. On receiving signal R, the hydraulic circuit of pump 3 is blocked in valve control unit 6, making the speed of the housing 8 equal to that of the shaft 7.
At the same time, in valve control unit 6 pump 4 is connected to a, if desired, variable resistance, in which kinetic energy is converted into heat by the circulation of hydraulic medium. If the speed of the engine 12 decreases, the gearbox 13 will, if possible, shift down, at which moment the main brake system of the vehicle will temporarily have to increase the braking effort because shifting is not possible while pumping. If necessary, the value of the variable resistance can be adapted to the desired minimum speed of the engine 12 by suitable fitting out of the valve control unit 6, so that this minimum value is not exceeded. The retarder can, of course, also be activated by a manual command, as is customary on lengthy descents. However, the advantage of the hydraulic variator 2 as a retarder is that it can also maintain the braking torque when the engine speed is decreasing.

Another advantage is that if, for example, clutch K1 is engaged and the lever on control unit 15 is in the "drive" position when the vehicle is standing on a gradient, the vehicle will stay in its place and not run back when the handbrake is released, since the hydromechanical variator is designed in such a way that it immediately provides counterpressure, in order to resist the run-back force on the gradient. By depressing the accelerator further, the vehicle will move forward. To make it possible to drive backward, the gearbox 13 can be provided with a reverse gear" in the customary fashion. It is, however, also possible to drive backward without making use of an idler gear, in which case the capacity and specification of pump 4 should be modified, enabling hydromechanical reversing.

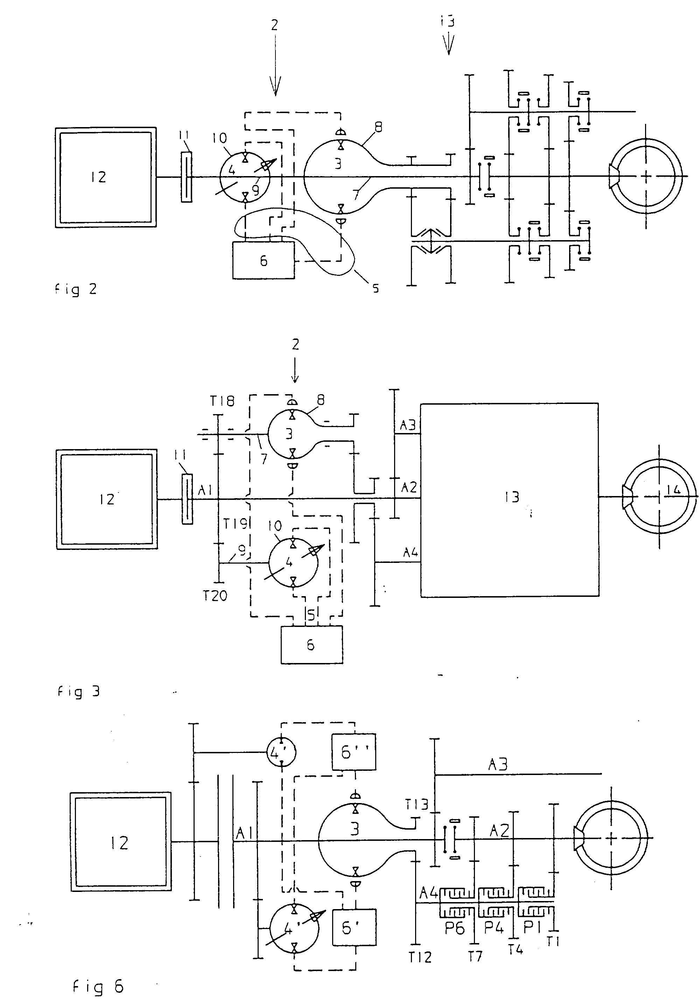

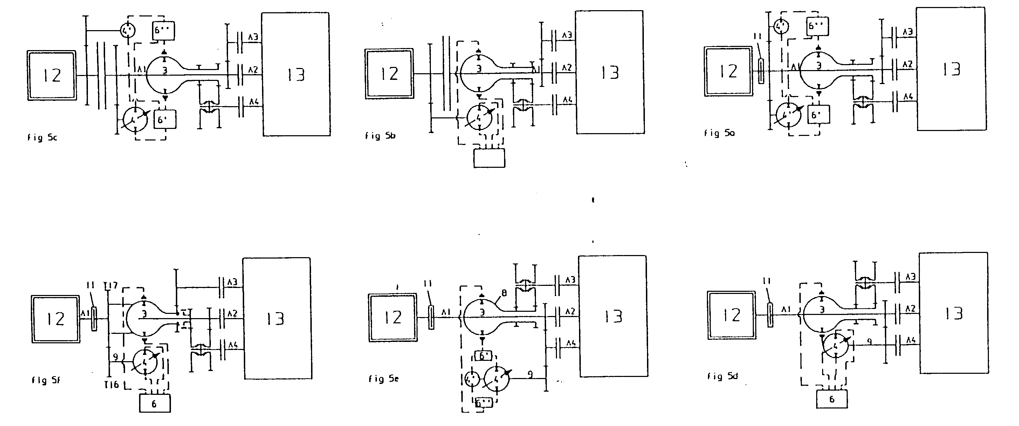

Figures 5a-5f show further variants of, in particular, the hydromechanical variator 2. Some relevant components of the variants are provided with corresponding reference figures. The gearbox 13 is shown diagrammatically by means of a block; in principle, it can be specified as desired. In the variants of figures 5a, 5c and 5e, the adjustable pump 4 is divided into a driven adjustable pump 4' and a driven pump 4'' with a fixed delivery rate. The ultimate adjustable delivery of the pump combination 4' and 4'' will be just as large as the delivery of the variants with a single adjustable 4. However, the control range of the pump 4' may be more limited if pumps 4' and 4'' are suitably controlled by the respective valve control units 6' and 6'', as a result of which the combination 4', 4'' will be able to drive the pump 3 faster than previously and a faster acceleration will be possible. The variants of the figures 5b and 5c also contain a clutch 17, whilst in fig. 5d the pump 4 is driven by a gear combination T21, T22 and in fig. 5f gear T17 is attached to pump housing 8, so that shaft A1 then does not pass through the housing to shaft A2. Besides the variants discussed, there will obviously also be numerous other potential variations of the present transmission system.

Figure 6 shows a special variant of the transmission system with the mechanical gearbox 13, where the gear sets can, with slip, be gradually connected to and disconnected from the layshaft driven by the variable part of the first pump and the central drive shaft with multi-plate clutches. Only shafts A2 and A4 are used for this. Gears T1, T4 and T7 are connected to A4 with gradually engageable wet multi-plate clutches. In case, for instance, that gear T1 is operational, an upward shift is made to T4 by gradually relieving plate clutch D1, whilst plate clutches P4 gradually cut in and meanwhile in the same period of time adjust pump 4 back to that speed for A4 which corresponds to the speed of gear T4.

The present transmission system has, besides a high degree of comfort in operation, a high efficiency and therefore delivers a high transport performance plus a low fuel consumption. In accordance with a flexible concept and without interruption of the tractive effort, it makes it possible to drive off from stationary without slip and with the highest possible torque.

There are no specific requirements for the gear sets K1-K5 (e.g. dog-clutches). If desired, they can be replaced by wet plate clutches in accordance with figure 6 and the clutches may be provided with synchromesh. An advantage of the two synchronous clutches S1/S2 is that, in principle, this extra ratio, which can be used as required, constitutes a range change, enabling the number of potential ratios to be doubled.

The system even offers the possibility, by using a properly dimensioned wet plate clutch between T1 and T4, of completely dispensing with the layshaft A3, thereby making the transmission system very compact.

## Claims

1. A transmission system comprising a hydromechanical variator (2) with a first pump (3) having a fixed delivery rate and a second pump (4) having an adjustable delivery rate hydraulically connected to the first pump, each pump having at least a pump shaft (7, 9) and a pump housing (8, 10) as component parts, one component of the first pump being connected for rotation with a driven input shaft (A1) of the transmission system and the other component being coupled for rotation with a hydraulically driven output shaft of the transmission system, and wherein one of the two component parts of the adjustable second pump (4) is fixed to the transmission housing, characterized in that the other component part of the second pump is coupled for rotation with the driven input shaft to influence the speed and the torque transmitted hydraulically to the output shaft by controlling the delivery rate of the second pump.

2. A transmission system in accordance with claim 1, with the feature that one component part of the first pump is the pump shaft which is coupled to the input shaft and the other component of the first pump is the pump housing (8) which is coupled to the output shaft, and that the input shaft is designed as a pump shaft passing through the first pump (3).

3. A transmission system in accordance with claim 2, with the feature that the pump shaft (7) passing through the first pump also passes through the adjustable second pump (4).

4. A transmission system in accordance with one of the claims 1-3, with the feature that the adjustable second pump (4) comprises a combination of a pump (4') with a fixed delivery rate and a parallel pump (4) with a variable delivery rate.

5. A transmission system in accordance with claim 4, with the feature that the pump with the fixed delivery rate is connected to the driven input shaft and the transmission system has a clutch through which the pump (4) with a variable delivery rate is coupled to the driven input shaft.

6. A transmission system in accordance with one of the claims 1-3, with the feature that the transmission system also has a mechanical gearbox (13) with two input shafts (A3, A4) and one output drive shaft (A2), one input shaft being coupled to one of the two component parts of the first pump and the other input shaft coupled to the other component of the first pump, whilst the gearbox contains gear units which connect the first or second input shaft to the drive shaft (A2).

7. A transmission system in accordance with claim 6, with the feature that one input shaft (A3) is coupled to the driven input shaft (A1) desiqned as a through pump shaft, and the concentric rotatable pump housing of the second pump (4) is coupled to the other concentric input shaft.

8. A transmission system in accordance with claim 6 or 7, with the feature that the gearbox (13) is provided with a layshaft which on the one side is rotatably coupled to one input shaft (A3) of the gearbox and is furthermore coupled to the output drive shaft (A2) by gears.

9. A transmission system in accordance with claim 8, with the feature that the other input shaft (A4) of the gearbox, which is coupled to the component part of the first pump (3) made variable by means of the second pump (4), is provided with further gear sets, via which the variable torque is routed to the output drive shaft (A2).

10. A transmission system in accordance with one of the claims 1-9, with the feature that the transmission system has an engine (12) connected to the driven input shaft (A1) and a central control unit (15) which has a first input to which a control signal is given which includes the value of the torque that is developed at the output drive shaft (A2), depending upon the position of the accelerator, and has several outputs, the first one connected to the second pump with a variable delivery rate and the other ones to the gear sets of the gearbox (13).

11. A transmission system in accordance with claims 10, with the feature that the control unit (15) possesses a memory which is loaded with data containing the relationship optimised according to the fuel consumption between the engine speed and the torque developed at that moment by the engine (12).

12. A transmission system in accordance with one of the claims 9-11, with the feature that the control unit and the adjustable second pump are designed to control the first pump in the up-speed range, one of the component parts of the first pump (8) rotating more quickly than the other component (7) coupled to the driven input shaft (A1), that each of the connectable gear sets (T1 to T13) connected to the control unit provide for connecting/disconnecting of the gears and that engine speed sensors linked to the control unit are connected to shafts which can be separately connected.

13. A transmission system in accordance with one of the claims 1-12, with the feature that one of the gears of the gearbox incorporated in the transmission system is made direct-drive (K7).

14. A transmission system in accordance with one of the claims 1-13, with the feature that the control unit is connected to a brake system customary in vehicles, such that when engaging the brake system, the adjustable second pump (4) moves the hydraulic medium through a resistance (6).

15. A transmission system in accordance with one of the claims 6-14, with the feature that the transmission system possesses a two sided synchronous clutch (51) interposed between the component part of the first pump driven with a variable speed and the relative input shaft of the mechanical gearbox.

16. A transmission system in accordance with one of the claims 1-15, with the feature that the gears of the layshaft in the mechanical gearbox driven with a variable speed are coupled by modulating wet multi-plate rotating clutches.

## Patentansprüche

1. Getriebesystem, versehen mit einem hydromechanischen Variator (2) mit einer ersten Pumpe (3) und einer hydraulisch mit dieser ersten Pumpe gekoppelten zweiten Pumpe (4), welche Pumpe jeweils wenigstens mit einer Pumpenachse (7, 9) und einem Pumpengehäuse (8, 10) versehen sind, wobei die eine Komponente der ersten Pumpe rotierbar mit einer angetriebenen Antriebachse (A1) des Getriebesystems und die andere Komponente rotierbar mit einer hydraulisch angetriebenen Abtriebsachse des Getriebesystems gekoppelt ist und wobei eine der beiden konstruktiven Komponenten der regelbaren zweiten Pumpe (4) fest mit dem Gehäuse des Getriebes verbunden ist, dadurch gekennzeichnet, daß die andere Komponente der zweiten Pumpe rotierbar mit der angetriebenen Antriebsachse gekoppelt ist, um die Geschwindigkeit und das Kräftepaar, das hydraulisch auf die Abtriebsachse übertragen wird, zu beeinflussen, indem die Leistung der zweiten Pumpe geregelt wird.

2. Getriebesystem nach Anspruch 1, dadurch gekennzeichnet, daß die eine zusammensetzende Komponente der ersten Pumpe die Pumpenachse ist, die mit der Antriebsachse gekoppelt ist, und die andere Komponente der ersten Pumpe das Pumpengehäuse (8) ist, das mit der Abtriebsachse gekoppelt ist, und daß die Antriebsachse als eine durch die erste Pumpe (3) hindurchgehende Pumpenachse ausgeführt ist.

3. Getriebesystem nach Anspruch 2, dadurch gekennzeichnet, daß die durch die erste Pumpe hindurchgehende Pumpenachse (7) ebenfalls durch die regelbare zweite Pumpe (4) hindurchgeht.

4. Getriebesystem nach einem der Ansprüche 1-3, dadurch gekennzeichnet, daß die regelbare zweite Pumpe (4) aus einer Konstruktion einer Pumpe (4') mit fester Leistung und einer zu dieser parallel geschalteten Pumpe (4) mit variabeler Leistung besteht.

5. Getriebesystem nach Anspruch 4, dadurch gekennzeichnet, daß die Pumpe mit fester Leistung mit der angetriebenen Antriebsachse gekoppelt ist und das Getriebesystem einer Kupplung aufweist, über welche die Pumpe (4) mit variabeler Leistung mit der angetriebenen Antriebsachse gekoppelt ist.

6. Getriebesystem nach einem der Ansprüche 1-3, dadurch gekennzeichnet, daß das Getriebesystem weiters einen mechanischen Getriebekasten (13) mit zwei Antriebsachsen (A3, A4) und einer Abtriebsachse (A2) aufweist, wobei eine Antriebsachse mit einer der beiden konstruktiven Komponenten der ersten Pumpe gekoppelt ist und die andere eingehende Achse mit der anderen Komponente der ersten Pumpe gekoppelt ist und der Getriebekasten Zahnradeinheiten aufweist, die die erste oder die zweite Antriebsachse mit der Abtriebsachse (A2) koppeln.

7. Getriebesystem nach Anspruch 6, dadurch gekennzeichnet, daß die eine Antriebsachse (A3) mit der als durchgehende Pumpenachse ausgeführten angetriebenen Antriebsachse (A1) gekoppelt ist und das konzentrisch rotierbare Pumpengehäuse der zweiten Pumpe (4) mit der anderen eingehenden konzentrischen Achse gekoppelt ist.

8. Getriebesystem nach Anspruch 6 oder 7, dadurch gekennzeichnet, daß der Getriebekasten (13) mit einer Hilfsachse versehen ist, die einerseits rotierbar mit der einen Antriebsachse (A3) des Getriebekasten gekoppelt ist und die andererseits über Zahnradeinheiten mit der abgehenden Abtriebsachse gekoppelt ist.

9. Getriebesystem nach Anspruch 8, dadurch gekennzeichnet, daß die andere Antriebsachse (A4) des Getriebenkastens, die mit den mittels der zweiten Pumpe variabelen Komponenten der ersten Pumpe (3) gekoppelt ist, mit weiteren Zahnradeinheiten versehen ist, über welche Zahnradeinheiten das variabele Kräftepaar an die Abtriebsachse (A2) gegeben wird.

10. Getriebesystem nach einem der vorigen Ansprüche 1-9, dadurch gekennzeichnet, daß das Getriebesystem einen an die angetriebene Antriebsachse angeschlossenen Motor (12) und eine zentrale Regelvorrichtung (15) aufweist, welche Regelvorrichtung einen ersten Eingang aufweist, an den ein Regelsignal gelegt wird, das eine gegebene Größe für das in Abhängigkeit der Position eines Gaspedals, an der Abgehenden Antriebsachse (A2) mit der zweiten Pumpe mit regelbarer Leistung verbunden ist und die weiteren Ausgänge mit den Zahnradeinheiten des Getriebekasten (13) verbunden sind.

11. Getriebesystem nach Anspruch 10, dadurch gekennzeichnet, daß die Regelschaltung (15) einen Speicher aufweist, der mit Daten geladen ist, in denen das im Blick auf den Kraftstoffverbrauch optimalisierte Verhältnis zwischen der Drehzahl des Motors und dem derzeitigen vom Motor (12) erzeugten Kräftepaar abgespeichert ist.

12. Getriebesystem nach einem der Ansprüche 9-11, dadurch gekennzeichnet, daß die Regelvorrichtung und die regelbare zweite Pumpe eingerichtet sind, um die erste Pumpe in den Beschleunigungsbereich zu steuern, wobei eine der konstruktiven Komponenten der ersten Pumpe (8) schneller dreht als die andere mit der angetriebenen Antriebsachse (A1) gekoppelte Komponente (7), daß die kupplungsfähigen Zahnradeinheiten (T1 bis T13) jeweils mit einem an die Regelvorrichtung angeschlossenen Steuereingang versehen sind zum Koppeln Entkoppeln der Zahnradeinheiten, und daß an die Regelvorrichtung angeschlossene Drehzahlsensoren, mit gesondert koppelbaren Achsen verbunden sind.

13. Getriebesystem nach einem der Ansprüche 1-12, dadurch gekennzeichnet, daß einer der Gänge des in das Getriebesystem aufgenommenen Getriebekastens als "prisedirect" (K7) ausgeführt ist.

14. Getriebesystem nach einem der Ansprüche 1-13, dadurch gekennzeichnet, daß die Regelvorrichtung mit einem für Autos üblichen Bremssystem gekoppelt ist, so daß die regelbare zweite Pumpe (4) das hydraulisches Medium durch einen Widerstand verlegt, wenn das Bremssystem wird eingeschaltet.

15. Getriebesystem nach einem der Ansprüche 6-14, dadurch gekennzeichnet, daß das Getriebesystem mit einer zweiseitigen Synchronkupplung (51) versehen ist, die sich zwischen der mit variabeler Geschwindigkeit angetriebenen Komponente der ersten Pumpe und der jeweiligen Antriebsachse des mechanischen Getriebekastens befindet.

16. Getriebesystem nach einem der Ansprüche 1-15, dadurch gekennzeichnet, daß die Zahnräder auf der mit der variabelen Drehzahl angetriebenen Hilfsachse in rotierenden Kupplungen mit mehreren Platten.

## Revendications

1. Système de transmission pourvu d'un variateur hydromécanique (2) avec une première pompe (3) et une seconde pompe (4) accouplée hydrauliquement à la première pompe, chacune desquelles pompes sont pourvues d'au moins un arbre de pompage (7, 9) et une boîte de pompage (8, 10), un composant de la première pompe étant accouplé en rotation avec un arbre entrant actionné (A1) du système de transmission, et l'autre composant étant accouplé en rotation avec un arbre sortant actionné hydrauliquement du système de transmission, et l'un des deux composants de la seconde pompe réglable (4) étant solidarisé avec la boîte de la transmission, caractérisé en ce que l'autre composant de la seconde pompe est accouplé en rotation avec l'arbre entrant actionné, afin d'agir sur la vitesse et le couple transmis hydrauliquement à l'arbre sortant en réglant le gain de la seconde pompe.

2. Système de transmission selon la revendication 1, caractérisé en ce que l'un des composants de la première pompe est l'arbre de pompage, lequel est accouplé avec l'arbre entrant, et l'autre composant de la première pompe est la boîte de pompage (8), laquelle est accouplée avec l'arbre sortant, et en ce que l'arbre entrant est réalisé comme un arbre de pompage traversant la première pompe (3).

3. Système de transmission selon la revendication 1, caractérisé en ce que l'arbre de pompage (7) traversant la première pompe traverse également la seconde pompe réglable.

4. Système de transmission selon l'une des revendications 1 à 3, caractérisé en ce que la seconde pompe réglable (4) est composée d'un ensemble d'une pompe (4') à gain fixe et une pompe (4) accouplée parallèlement à celle-ci à gain variable.

5. Système de transmission selon la revendication 4, caractérisé en ce que la pompe à gain fixe est accouplée avec l'arbre entrant actionné et en ce que le système de transmission comprend un accouplement, par lequel la pompe (4) à gain variable est accouplée avec l'arbre entrant actionné.

6. Système de transmission selon l'une des revendications 1 à 3, caractérisé en ce que le système de transmission comprend en outre une boite de vitesses mécanique (13) ayant deux arbres entrants (A3, A4) et un arbre moteur sortant (A2), un arbre entrant étant accouplé avec un des deux composants de la première pompe et l'autre arbre entrant étant accouplé avec l'autre composant de la première pompe, et la boîte de vitesses comprenant des unités d'engrenage accouplant le premier ou le second arbre entrant avec l'arbre moteur (A2).

7. Système de transmission selon la revendication 6, caractérisé en ce que l'un des arbres entrants (A3) est accouplé avec l'arbre entrant actionné (A1) réalisé comme arbre de pompage traversant, et en ce que la boîte de pompage concentriquement rotative de la seconde pompe (4) est accouplée avec l'autre arbre entrant concentrique.

8. Système de transmission selon la revendication 6 ou 7, caractérisé en ce que la boîte de vitesses (13) est pourvue d'un arbre auxiliaire, d'une part accouplé en rotation avec l'un des arbres entrants (A3) de la boîte de vitesses et d'autre part accouplé avec l'arbre moteur sortant par des unités d'engrenage.

9. Système de transmission selon la revendication 8, caractérisé en ce que l'autre arbre entrant (A4) de la boîte de vitesses, lequel est accouplé avec les composants de la première pompe (3) variables au moyen de la seconde pompe, est pourvu d'autres unités d'engrenage, par lesquelles le couple variable est guidé à l'arbre moteur sortant (A2).

10. Système de transmission selon l'une des revendications 1 à 9, caractérisé en ce que le système de transmission comprend un moteur (12) accouplé avec l'arbre entrant actionné et un dispositif central de réglage (15), lequel dispositif de réglage comprend une première entrée à laquelle un signal de réglage est transmis comprenant une mesure donnée pour la position d'une pédale d'accélérateur, le dispositif de réglage est accouplé à l'arbre moteur sortant (A2) de la seconde pompe à gain variable, et que les autres sorties sont accouplées avec les unités d'engrenage de la boîte de transmission (13).

11. Système de transmission selon la revendication 10, caractérisé en ce que le circuit de réglage (15) comprend une mémoire chargée de données dans laquelle la relation optimalisée pour la consommation de carburant entre le régime du moteur et le couple momentané développé par le moteur (12) est mémorisée.

12. Système de transmission selon l'une des revendications 9 à 11, caractérisé en ce que le circuit de réglage et la seconde pompe réglable sont aménagés pour envoyer la première pompe dans le domaine accélérant, l'un des composants de la première pompe (8) tournant plus vite que l'autre composant (7) accouplé avec l'arbre entrant actionné (A1), en ce que chacune des unités d'engrenage accouplables (T1 à T13) est pourvue d'une entrée de commande accouplée au dispositif de réglage pour l'accouplage/découplage des unités d'engrenage, et en ce que des senseurs de régime accouplés au dispositif de réglage sont liés à des arbres séparément accouplables.

13. Système de transmission selon l'une des revendications 1 à 12, caractérisé en ce que l'une des vitesses de la boîte de vitesses intégrée dans le système de transmission est réalisée comme une "prise directe" (K7).

14. Système de transmission selon l'une des revendications 1 à 13, caractérisé en ce que le dispositif de réglage est accouplé avec un système de freinage usuel dans des véhicules et qu'il est aménagé d'une telle façon que la seconde pompe réglable (4) déplace un milieu hydraulique par une résistance (6) lors de mise en marche du système de freinage.

15. Système de transmission selon l'une des revendications 6 à 14, caractérisé en ce que le système de transmission est pourvu d'un embrayage synchrone bilatéral (51), situé entre le composant actionné d'une vitesse variable de la première pompe et l'arbre entrant concerné de la boîte de vitesses mécanique.

16. Système de transmission selon l'une des revendications 1 à 15, caractérisé en ce que les roues d'engrenage sur l'arbre auxiliaire actionné d'un régime variable dans des embrayages à disques multiples.
